# EUROPEAN PATENT APPLICATION

(11) **EP 4 030 867 A1**
(43) Date of publication of application: **20.07.2022**
(21) Application number: 22151464.9
(22) Date of filing: 13.01.2022
(51) Int. Cl.: H04W 76/28

(54) **METHOD FOR CONFIGURING DISCONTINUOUS RECEPTION SETTING AND USER EQUIPMENT**

(30) Priority: 15.01.2021 US 202163138135 P
(71) Applicant: FG Innovation Company Limited, Hong Kong (CN)
(72) Inventor: CHIN, HENG-LI, 114 Taipei (TW)
(74) Representative: Müller Hoffmann & Partner

(57) **Abstract**

The disclosure provides a method for configuring a discontinuous reception (DRX) setting and user equipment (UE). The method includes: receiving, by the UE, at least one configuration from a network node, wherein the at least one configuration is used for receiving a multicast broadcast service (MBS), the at least one configuration comprises a first radio network temporary identifier (RNTI) and a plurality of first DRX parameters used for monitoring a physical downlink control channel (PDCCH) based on the first RNTI, and the UE receives the MBS from the network node via at least one of a point-to-point (PTP) transmission scheme and a point-to-multipoint (PTM) transmission scheme; receiving, by the UE, an indication from the network node, wherein the indication indicates a transmission scheme used for the MBS; and starting, by the UE, a first DRX timer associated with the first DRX parameters in response to the indication.

## Description

### BACKGROUND

### 1. Field of the Invention

The disclosure generally relates to communication mechanisms using discontinuous reception (DRX), in particular, to a method for configuring a DRX setting and user equipment (UE).

### 2. Description of Related Art

As a well-known evolution in 3rd Generation Partnership Project (3GPP), Long Term Evolution (LTE) cellular wireless communication system had introduced Multimedia Broadcast Multicast Services (MBMS), in earlier releases, based on a standardized point to multipoint (PTM) interface. The MBMS was designed to provide efficient delivery of broadcast and multicast data (or packet), both within a cell (single cell point to multipoint (SC-PTM)) as well as within multiple of cell (via Multicast Broadcast Single Frequency Network (MBSFN)) belong to same core network.

To support the MBMS, the UE may at least be (pre)configured with particular configuration regarding protocol stack. For example, in case of supporting MBMS among multiple cells belong to single core network, the UE may at least be configured with one control channel, such as Multicast Control Channel (MCCH), and one traffic channel, such as Multicast Traffic Channel (MTCH).

Similarly, in case of supporting MBMS within a cell, the UE may at least be configured with one control channel, such as Single-Cell Multicast Control Channel (SC-MCCH), and one traffic channel, such as Single-Cell Multicast Traffic Channel (SC-MTCH). The MCCH and SC-MCCH are point-to-multipoint downlink channels used for transmitting MBMS control information from the network to the UE, for one or several MTCHs and SC-MTCHs. The MTCH and SC-MTCH are point-to-multipoint downlink channel for transmitting traffic data from the network (e.g., eNB) to the UE.

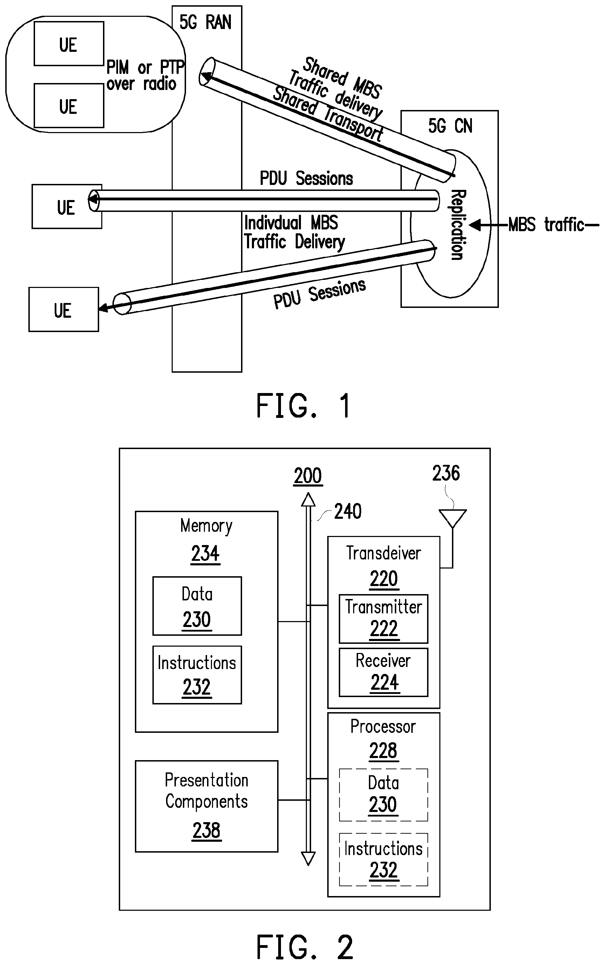

See FIG. 1, which shows various MBS delivery methods. In general, broadcast/multicast service may to be delivered from a single data source (e.g., MBS server) to multiple UEs. Multiple delivery methods may be used to deliver MBS traffic in the 5GS (5G system).

From 5G CN point of view, two delivery methods are possible for MBS: (1) 5GC Individual MBS traffic delivery method; and (2) 5GC Shared MBS traffic delivery method.

In method (1), 5G CN receives a single copy of MBS data packets and delivers separate copies of those MBS data packets to individual UEs via per-UE PDU sessions, and hence for each such UE, one PDU session is required to be associated with an MBS session. This delivery method may be referred to as a unicast delivery method.

In method (2), 5G CN receives a single copy of MBS data packets and delivers a single copy of those MBS data packet to a gNB, which then delivers them to one or multiple UEs.

From the point of view of the radio access network (RAN) (in the case of 5GC shared MBS traffic delivery method), two delivery methods may be used for transmission of MBS packet flows over radio (e.g., between the gNB and the UE): (1) PTP delivery method: a gNB delivers separate copies of MBS data packet over radio to individual UE ; and (2) PTM delivery method: a gNB delivers a single copy of MBS data packets over radio to a set of UEs

PTP or PTM delivery (with 5GC shared delivery method) and 5GC Individual MBS traffic delivery method may be used at the same time for an MBS session.

For 5GC individual delivery method, transmission of an MBS session over radio is performed on PDCCH (Physical Downlink Control Channel) for C-RNTI (Cell Radio Network Temporary Identifier), and DL-SCH (Downlink Shared Channel) MAC (Medium Access Control) PDU (Protocol Data Unit) is received.

For PTP delivery method, DCI (Downlink Control Information) associated with C-RNTI may be transmitted on PDCCH for scheduling of MBS data packet in the DL. PTP delivery method may be referred to as unicast transmission in the present disclosure.

For PTM delivery method, DCI associated with G-RNTI may be transmitted on PDCCH for scheduling of MBS data packet (scrambled by the same G-RNTI) in the DL. Alternatively, for PTM delivery method, DCI associated with C-RNTI may be transmitted on PDCCH for scheduling of MBS data packet (scrambled by G-RNTI) in the DL. Generally, PTM delivery method may be referred to as multicast transmission in the present disclosure.

Moreover, this method may have the same feature as LTE MBMS transmitted using SC-PTM transmission. That is, a G-RNTI may be associated with one or multiple MBS. Moreover, each MBS may be associated with an MBS ID (e.g., TMGI (Temporary Mobile Group Identity), *sessionId,* etc.). In one implementation, the network may transmit a message that includes a list of one or multiple G-RNTIs and their respective MBS (e.g., TMGI, *sessionId,* etc.) to one or multiple UEs. Hence, a UE may maintain multiple G-RNTIs, and multiple UEs may share the same G-RNTI.

In NR (new radio), it is expected a SC-PTM likes service may be supported in near releases. In the present disclosure, the SC-PTM likes service is named as Multicast Broadcast Service (MBS). Before achieving there, and it is not clear how the MBS be supported and operated by UE and gNB in NR, since the NR had quite large evolution from LTE. For example, how gNB configuring the protocol stack of AS (Access Stratum) layer, HARQ process, and several procedures (e.g., DRX procedure, HARQ (Hybrid Automatic Repeat reQuest) procedure, etc.) within MAC layer of NR having significant difference from LTE.

Moreover, it is also not clear how MBS is operated, for example, how gNB configures the protocol stack, how gNB to perform retransmission and how the data transmission affect some other procedure (i.e., DRX).

### SUMMARY OF THE INVENTION

Accordingly, the disclosure is directed to a method for configuring a discontinuous reception (DRX) setting and UE, which may be used to solve the above technical problems.

The embodiments of the disclosure provide a method for configuring a discontinuous reception (DRX) setting, adapted to user equipment (UE). The method includes: receiving, by the UE, at least one configuration from a network node, wherein the at least one configuration is used for receiving a multicast broadcast service (MBS), the at least one configuration includes a first radio network temporary identifier (RNTI) and a plurality of first DRX parameters used for monitoring a physical downlink control channel (PDCCH) based on the first RNTI, and the UE receives the MBS from the network node via at least one of a point-to-point (PTP) transmission scheme and a point-to-multipoint (PTM) transmission scheme; receiving, by the UE, an indication from the network node, wherein the indication indicates a transmission scheme used for the MBS; and starting, by the UE, a first DRX timer associated with the first DRX parameters in response to the indication.

The embodiments of the disclosure provide UE including a transceiver and a processor. The processor is coupled to the transceiver and configured to perform: controlling the transceiver to receive at least one configuration from a network node, wherein the at least one configuration is used for receiving a multicast broadcast service (MBS), the at least one configuration includes a first radio network temporary identifier (RNTI) and a plurality of first DRX parameters used for monitoring a physical downlink control channel (PDCCH) based on the first RNTI, and the UE receives the MBS from the network node via at least one of a point-to-point (PTP) transmission scheme and a point-to-multipoint (PTM) transmission scheme; controlling the transceiver to receive an indication from the network node, wherein the indication indicates a transmission scheme used for the MBS; and starting a first DRX timer associated with the first DRX parameters in response to the indication.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the disclosure.
FIG. 1 shows various MBS delivery methods.
FIG. 2 illustrates a block diagram of a node for wireless communication, in accordance with various aspects of the present application.
FIG. 3 shows protocol stacks of UE according to an embodiment of the disclosure.
FIG. 4 shows a flow chart of the method for configuring a DRX setting according to an embodiment of the disclosure.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

In the following, some terms and definitions are provided.

Cell: Radio network object that can be uniquely identified by a User Equipment from a (cell) identification that is broadcasted over a geographical area from one UTRAN Access Point. A Cell is either FDD or TDD mode.

Serving Cell: For a UE in RRC_CONNECTED not configured with CA/DC there is only one serving cell comprising of the primary cell. For a UE in RRC_CONNECTED configured with CA/ DC the term 'serving cells' is used to denote the set of cells comprising of the Special Cell(s) and all secondary cells.

CA: In Carrier Aggregation (CA), two or more Component Carriers (CCs) are aggregated. A UE may simultaneously receive or transmit on one or multiple CCs depending on its capabilities. CA is supported for both contiguous and non-contiguous CCs. When CA is deployed frame timing and SFN are aligned across cells that can be aggregated. The maximum number of configured CCs for a UE is 16 for Downlink (DL) and 16 for Uplink (UL). When CA is configured, the UE only has one Radio Resource Control (RRC) connection with the network. At RRC connection establishment/re-establishment/handover, one serving cell provides the Non Access Stratum (NAS) mobility information, and at RRC connection re-establishment/handover, one serving cell provides the security input. This cell is referred to as the Primary Cell (PCell). Depending on UE capabilities, Secondary Cells (SCells) can be configured to form together with the PCell a set of serving cells. The configured set of serving cells for a UE therefore always consists of one PCell and one or more SCells.

Configured Grant: gNB allocates uplink resources for the initial HARQ transmissions to UEs. Two types of configured grants (CGs) are defined: (1) Type 1: RRC directly provides the configured uplink grant (including the periodicity); (2) Type 2: RRC defines the periodicity of the configured uplink grant while PDCCH addressed to CS-RNTI can either signal and activate the configured uplink grant, or deactivate it. That is, a PDCCH addressed to CS-RNTI indicates that the uplink grant can be implicitly reused according to the periodicity defined by RRC, until deactivated.

When a configured uplink grant is active, if the UE cannot find its C-RNTI/CS-RNTI/MCS-C-RNTI on the PDCCH(s), an uplink transmission according to the configured uplink grant can be made. Otherwise, if the UE finds its C-RNTI/CS-RNTI/MCS-C-RNTI on the PDCCH(s), the PDCCH allocation overrides the configured uplink grant. It is noted that, the usage of MCS-C-RNTI is equivalent to that of C-RNTI in MAC procedures (except for the C-RNTI MAC CE).

HARQ: A functionality ensures delivery between peer entities at Layer 1 (i.e., Physical Layer). A single HARQ process supports one Transport Block (TB) when the physical layer is not configured for downlink/uplink spatial multiplexing, and when the physical layer is configured for downlink/uplink spatial multiplexing, a single HARQ process supports one or multiple TBs. There is one HARQ entity per serving cell. Each of HARQ entity supports a parallel (number) of DL and UL HARQ process.

Hybrid automatic repeat request acknowledgement (HARQ-ACK): A HARQ-ACK information bit value of 0 represents a negative acknowledgement (NACK) while a HARQ-ACK information bit value of 1 represents a positive acknowledgement (ACK).

Timer: MAC entity can setup one or more timers for individual purposes, for example, triggering some uplink signaling retransmission or limiting some uplink signaling retransmission period. A timer is running once it is started, until it is stopped or until it expires; otherwise it is not running. A timer can be started if it is not running or restarted if it is running. A Timer is always started or restarted from its initial value. Wherein the initial value can be but not limited to be configured by the gNB via downlink RRC signaling or be pre-defined/pre-determined value addressed in some specification.

BWP: A subset of the total cell bandwidth of a cell is referred to as a Bandwidth Part (BWP) and BA is achieved by configuring the UE with BWP(s) and telling the UE which of the configured BWPs is currently the active one. To enable Bandwidth Adaptation (BA) on the PCell, the gNB configures the UE with UL and DL BWP(s). To enable BA on SCells in case of CA, the gNB configures the UE with DL BWP(s) at least (i.e., there may be none in the UL). For the PCell, the initial BWP is the BWP used for initial access. For the SCell(s), the initial BWP is the BWP configured for the UE to first operate at SCell activation. UE may be configured with a first active uplink BWP by a firstActiveUplinkBWP Information Element (IE). If the first active uplink BWP is configured for an SpCell, the firstActiveUplinkBWP IE field contains the ID of the UL BWP to be activated upon performing the RRC (re-)configuration. If the field is absent, the RRC (re-)configuration does not impose a BWP switch. If the first active uplink BWP is configured for an SCell, the firstActiveUplinkBWP IE field contains the ID of the uplink bandwidth part to be used upon MAC-activation of an SCell.

PDCCH: In the downlink, the gNB can dynamically allocate resources to UEs via the C-RNTI/MCS-C-RNTI/CS-RNTI on PDCCH(s). A UE always monitors the PDCCH(s) in order to find possible assignments when its downlink reception is enabled (activity governed by DRX when configured). When CA is configured, the same C-RNTI applies to all serving cells.

PDSCH/PUSCH: The PDCCH can be used to schedule DL transmissions on PDSCH and UL transmissions on PUSCH.

Transport Block: The data from the upper layer (or MAC) given to the physical layer is basically referred as transport block.

The terms, definitions and abbreviations as given in this disclosure are either imported from existing documentation (ETSI, ITU or elsewhere) or newly created by 3GPP experts whenever the need for precise vocabulary was identified.

FIG. 2 illustrates a block diagram of a node for wireless communication, in accordance with various aspects of the present application. As shown in FIG. 2, a node 200 may include a transceiver 220, a processor 228, a memory 234, one or more presentation components 238, and at least one antenna 236. The node 200 may also include an RF (radio frequency) spectrum band module, a base station communications module, a network communications module, and a system communications management module, Input/Output (I/O) ports, I/O components, and power supply (not explicitly shown in FIG. 2). Each of these components may be in communication with each other, directly or indirectly, over one or more buses 240. In one implementation, the node 200 may be a UE or a base station that performs various functions described in the disclosure.

The transceiver 220 having a transmitter 222 (e.g., transmitting/transmission circuitry) and a receiver 224 (e.g., receiving/reception circuitry) may be configured to transmit and/or receive time and/or frequency resource partitioning information. In some implementations, the transceiver 220 may be configured to transmit in different types of subframes and slots including, but not limited to, usable, non-usable and flexibly usable subframes and slot formats. The transceiver 220 may be configured to receive data and control channels.

The node 200 may include a variety of computer-readable media. Computer-readable media can be any available media that can be accessed by the node 200 and include both volatile and non-volatile media, removable and non-removable media. By way of example, and not limitation, computer-readable media may include computer storage media and communication media. Computer storage media includes both volatile and non-volatile, removable and non-removable media implemented in any method or technology for storage of information such as computer-readable instructions.

Computer storage media includes RAM, ROM, EEPROM, flash memory or other memory technology, CD-ROM, Digital Versatile Disks (DVD) or other optical disk storage, magnetic cassettes, magnetic tape, magnetic disk storage or other magnetic storage devices. Computer storage media does not include a propagated data signal. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

The memory 234 may include computer-storage media in the form of volatile and/or non-volatile memory. The memory 234 may be removable, non-removable, or a combination thereof. Exemplary memory includes solid-state memory, hard drives, optical-disc drives, etc. As illustrated in FIG. 2, The memory 234 may store computer-readable, computer-executable instructions 232 (e.g., software codes) that are configured to, when executed, cause the processor 228 to perform various functions described in the disclosure. Alternatively, the instructions 232 may not be directly executable by the processor 228 but be configured to cause the node 200 (e.g., when compiled and executed) to perform various functions described in the disclosure.

The processor 228 (e.g., having processing circuitry) may include an intelligent hardware device, e.g., a Central Processing Unit (CPU), a microcontroller, an ASIC, etc. The processor 228 may include memory. The processor 228 may process the data 230 and the instructions 232 received from the memory 234, and information through the transceiver 220, the base band communications module, and/or the network communications module. The processor 228 may also process information to be sent to the transceiver 220 for transmission through the antenna 236, to the network communications module for transmission to a core network.

One or more presentation components 238 presents data indications to a person or other device. Exemplary presentation components 238 include a display device, speaker, printing component, vibrating component, etc.

From the above description, it is manifested that various techniques may be used for implementing the concepts described in the present application without departing from the scope of those concepts. Moreover, while the concepts have been described with specific reference to certain implementations, a person of ordinary skill in the art would recognize that changes may be made in form and detail without departing from the scope of those concepts. As such, the described implementations are to be considered in all respects as illustrative and not restrictive. It should also be understood that the present application is not limited to the particular implementations described above, but many rearrangements, modifications, and substitutions are possible without departing from the scope of the present disclosure.

In the embodiments of the disclosure, the UE (e.g., the node 200 in FIG. 2) can be configured to perform DRX operations, and the basic idea of the DRX operation is introduced below.

In general, the NR support DRX mechanism and the DRX was introduced to control PDCCH monitoring for particular type(s) of RNTI. In DRX mechanism, UE periodically monitor PDCCH according to the gNB's configuration and the realistic traffic pattern. That is, UE alternatively monitor PDCCH in some preconfigured Active Time even though there is no data transmission. However, if data transmission occurred during Active Time, the UE may extend its stay in Active for finishing the possible transmission.

During the Active Time, the UE monitors PDCCH for possible data transmission/reception indication. UE's MAC (Medium Access Control) entity may be configured by RRC with a DRX functionality that controls the UE's PDCCH monitoring activity for particular type of RNTI. That is, in RRC_CONNECTED, if DRX is configured, the MAC entity is allowed to monitor the PDCCH for particular type of RNTI discontinuously follow the DRX operation. Per the definition in 3GPP TS 38.331 and TS 38.321, RRC controls DRX operation by configuring following parameters and timers: *drx-LongCycle, drx-ShortCycle, drx-ShortCycleTimer, drx-StartOffset, drx-SlotOffset, drx-onDurationTimer, drx-InactivityTimer, drx-HARQ-RTT-TimerDL, drx-RetransmissionTimerDL.*

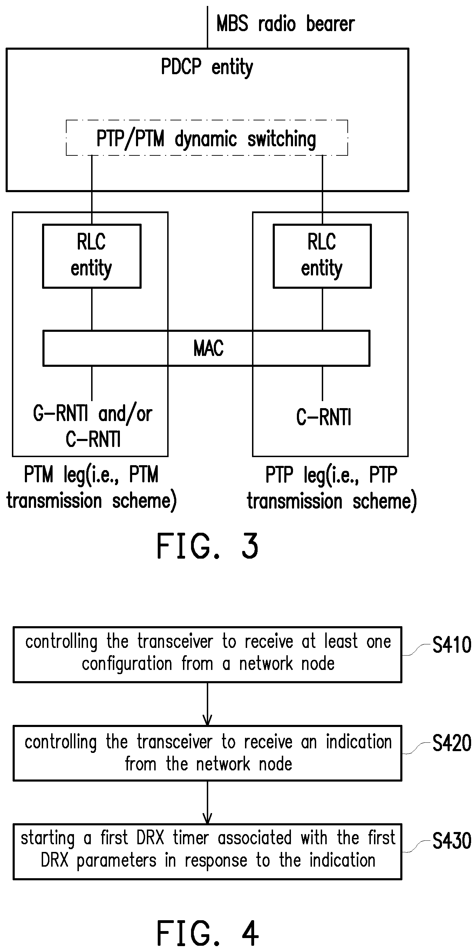

See FIG. 3, which shows protocol stacks of UE according to an embodiment of the disclosure. In FIG. 3, once the UE is configured with at least one MBS radio bearer (MRB), it is assumed that the UE is configured with either a protocol stack as defined in FIG. 3 for a configured MRB Each MRB is associated with at least one transmission scheme (e.g., PTP and/or PTM), and the type of the RNTI for PDCCH monitoring for each transmission mode are different.

In FIG. 3, the PDCP (Packet Data Convergence Protocol) entity can determine to use at least one of PTM and PTP. In one embodiment, if the PDCP entity determines to use PTM, the RLC (radio link control) entity and the MAC entity can receive the MBS service based on the G-RNTI and/or C-RNTI. In one embodiment, if the PDCP entity determines to use PTP, the RLC entity and the MAC entity can receive the MBS service based on the C-RNTI.

The gNB may have flexibility on controlling the DRX operation independently among the multiple of transmission schemes. Furthermore, the gNB may also have flexibility on controlling the DRX operation independently among PDDCH associated with MBS and PDCCH which is not associated with MBS.

There may be several alternatives on how the gNB configuring DRX and how the UE behave once the UE is configured with a first PDCCH (e.g., CORESET/search space) associated with MBS and a second PDCCH (e.g., CORESET/search space) which is not associated with MBS. For example, there may be alternatives: Centralized DRX and Distributed DRX.

In Centralized DRX approach, UE's behavior on PDCCH monitoring on the first and the second PDCCH are centralized control by a single DRX configuration. On the other hand, in distributed DRX approach, UE's behavior on PDCCH monitoring on the first and the second PDCCH are centralized control by two individual DRX configurations.

In some embodiments, the DRX related parameters and timer such as *drx-LongCycle, drx-ShortCycle, drx-ShortCycleTimer, drx-StartOffset, drx-SlotOffset, drx-onDurationTimer, drx-InactivityTimer, drx-HARQ-RTT-TimerDL* and *drx-RetransmissionTimerDL* were configured for different purposes. For example, *drx-LongCycle, drx-ShortCycle, drx-ShortCycleTimer, drx-StartOffset* and *drx-SlotOffset* are configured for controlling cycle of active time. The *drx-onDurationTimer* and *drx-InactivityTimer* controlling the length of the active time. The *drx-HARQ-RTT-TimerDL* and *drx-RetransmissionTimerDL* controls the monitoring of scheduling for data retransmission.

In one embodiment, the gNB may configure these parameters and timers of different purpose as centralized operation or distributed operation individually. For example, the UE may receive only one set of *drx-LongCycle, drx-ShortCycle, drx-ShortCycleTimer, drx-StartOffset* and *drx-SlotOffset* which were indicated by the gNB to share among MRB and non-MRB. Meanwhile, the UE may receive only two sets of *drx-onDurationTimer* and *drx-InactivityTimer,* each are indicated by the gNB to applied for one of MRB and non-MRB. That is, one set of the two sets of *drx-onDurationTimer* and *drx-InactivityTimer* is for MRB, and another set of the two sets of *drx-onDurationTimer* and *drx-InactivityTimer* is for non-MRB. In one implementation, a non-MRB may be referred to as a Data Radio Bearer (DRB).

Based on the assumption that each of the DRX parameters and DRX timers may be configured as centralized and distributed approach independently, several possible combinations of the DRX timers in the centralized and distributed approach are exemplarily shown in Table 1.

**Table 1**

| | Centralized DRX | Distributed DRX |
|---|---|---|
| Case I | N/A | • *drx-LongCycle* |
| | | • *drx-ShortCycle* |
| | | • *drx-ShortCycleTimer* |
| | | • *drx-StartOffset* |
| | | • *drx-SlotOffset* |
| | | • *drx-onDurationTimer* |
| | | • *drx-InactivityTimer* |
| | | • *drx-HARQ-RTT-TimerDL* |
| | | • *drx-RetransmissionTimerDL* |
| Case II | *• drx-LongCycle* | *• drx-onDurationTimer* |
| | *• drx-ShortCycle* | *• drx-InactivityTimer* |
| | *• drx-ShortCycleTimer* | *• drx-HARQ-RTT-TimerDL* |
| | *• drx-StartOffset* | *• drx-RetransmissionTimerDL* |
| | *• drx-SlotOffset* | |
| Case III | • *drx-LongCycle* | *• drx-HARQ-RTT-TimerDL* |
| | • *drx-ShortCycle* | *• drx-RetransmissionTimerDL* |
| | • *drx-ShortCycleTimer* | |
| | • *drx-StartOffset* | |
| | • *drx-SlotOffset* | |
| | • *drx-onDurationTimer* | |
| | • *drx-InactivityTimer* | |

Detail definition of the cases listed in the Table 1 are addressed in the below.
Case I: All the parameters and timers are configured by the gNB to operate as distributed. That is, the UE receives two sets of: *drx-LongCycle, drx-ShortCycle, drx-ShortCycleTimer, drx-StartOffset, drx-SlotOffset, drx-onDurationTimer, drx-InactivityTimer, drx-HARQ-RTT-TimerDL* and *drx-RetransmissionTimerDL.* One set of the two sets is for an MRB, another set of the two sets is for non-MRB, and the parameters and timers mention above are just exemplary. Since the gNB may not configure all the parameters and timers (i.e., few of them may be optionally configured), the Case I may be implemented/interpreted as only part of parameters and timers are configured. In addition, the part of parameters and timers are all individually applied for MBS and non-MBS (distributed DRX).
Case II: UE is configured with one set of the timers and parameters for controlling cycle of active time and is also configured with two sets of the timers and parameters for controlling the length of the active time and for controlling the monitoring of scheduling for data retransmission. That is, the set of timers and parameters for controlling cycle of active time are shared among MBS and non-MBS (centralized DRX). In one embodiment, each of the two sets of the timers and parameters for controlling the length of the active time and for controlling the monitoring of scheduling for data retransmission is individually applied for MBS and non-MBS (distributed DRX).
Case III: UE is configured with one set of the timers and parameters for controlling cycle of active time and for controlling the length of the active time. In addition, the UE is configured with two sets of the timers and parameters and for controlling the monitoring of scheduling for data retransmission. That is, the set of timers and parameters for controlling cycle of active time and controlling the length of the active time are shared among MBS and non-MBS (centralized DRX). In one embodiment, each of the two sets of the timers and parameters for controlling the monitoring of scheduling for data retransmission is individually applied for MBS and non-MBS (distributed DRX).

While the *drx-onDurationTimer, drx-InactivityTimer* or *drx-RetransmissionTimerDL* of non-MBS is running (i.e., Active time), the UE may monitor PDCCH for C-RNTI. In addition, while the *drx-onDurationTimer, drx-InactivityTimer* or *drx-RetransmissionTimerDL* of MBS is running, the UE may monitor PDCCH for G-RNTI.

In the following, the detailed designs on how the UE may behave on each case are introduced. It is assumed that the gNB may apply C-RNTI to schedule data reception for non-MBS (or PTP transmission via MBS) and may apply G-RNTI to schedule data reception for MBS (e.g., PTM transmission via MBS).

In case I and case II of a first embodiment, the UE may maintain/configure two *drx-InactivityTimer* (or any other DRX timer), one for non-MBS and the other for MBS. In one example, the *drx-InactivityTimer* for non-MBS may be referred to as a first *drx-InactivityTimer,* and the *drx-InactivityTimer* for MBS may be referred to as a second *drx-InactivityTimer,* but the disclosure is not limited thereto. In one example, the DRX timers for non-MBS or PTP transmission scheme and the DRX timers for MBS (or PTM transmission scheme) may be configured explicitly by the network. The network may configure all the DRX timers for non-MBS and/or PTP transmission scheme of a specific MBS (e.g., including the first *drx-InactivityTimer*) in a first IE (e.g., DRX-Config IE). The network may configure all the DRX timers for a specific MBS and/or PTM transmission scheme of a specific MBS (e.g., including the second *drx-InactivityTimer*) in a second IE (e.g., DRX-Config-MBS IE). The second IE (e.g., DRX-Config-MBS IE) may correspond to the specific MBS. Thus, all the DRX timers in the second IE (e.g., including the second *drx-InactivityTimer*) may correspond to the (G-RNTI of the) specific MBS. Moreover, all the DRX timers configured in the second IE may control the UE behaviour on PDCCH monitoring for the G-RNTI that corresponds to the specific MBS (e.g., for monitoring via a PTM transmission scheme I of the specific MBS). For example, when a second *drx-InactivityTimer* configured in the second IE is running, the UE may monitor on PDCCH for the G-RNTI that corresponds to the specific MBS. On the other hand, all the DRX timers configured in the first IE may control the UE behaviour on PDCCH monitoring for a C-RNTI (e.g., for monitoring via a PTP transmission scheme).

In the first embodiment, once any one or multiple of situations listed as below happened, the UE may (re)start the first *drx-InactivityTimer* of non-MBS (or any other DRX timer configured for non-MBS): (a) the transmission scheme is switched from PTM transmission scheme to PTP transmission scheme; (b) the transmission scheme is switched from PTM transmission scheme I (G-RNTI) to PTP transmission scheme; (c) the transmission scheme is switched from PTM transmission scheme II (C-RNTI) to PTP transmission scheme; (d) UE receives any indicator indicating any of situations of (a), (b) and (c) as above; (e) the UE transmits a HARQ feedback in response to a data reception scheduled by the gNB through G-RNTI (e.g., PTM transmission scheme I); (f) the UE transmits a HARQ feedback in response to a data reception scheduled by the gNB through G-RNTI (e.g., PTM transmission scheme I), and the HARQ feedback indicating NACK; (g) the UE is scheduled by gNB with a data reception through PTM transmission scheme II. That is, a DCI is received, and the DCI with Cyclic Redundancy Check (CRC) bits scrambled by C-RNTI schedule group common PDSCH reception; (h) UE receives a DCI with CRC bits scrambled by G-RNTI; (i) UE receives a DCI with CRC bits scrambled by G-RNTI and the DCI also indicates the scheduled PDSCH reception is new transmission.

In one implementation, the indicator may be referred to as a RRC signaling to indicate the switching from PTM transmission scheme to PTP transmission scheme. Moreover, the RRC signaling may indicate the release of a RLC entity that corresponds to the PTM leg for performing PTM transmission (scheme I/scheme II). The RRC signaling may also indicate the addition of a RLC entity that corresponds to the PTP leg for perform PTP transmission.

In one implementation, the indicator may be referred to as a DCI or a MAC CE to indicate the switching from PTM transmission scheme to PTP transmission scheme. Here, the DCI or the MAC CE may indicate the deactivation of G-RNTI monitoring for the corresponding PTM transmission. The UE may stop monitoring on PDCCH for DCI associated with G-RNTI for PTM transmission upon receiving the DCI or the MAC CE which indicates the switching from PTM transmission scheme to PTP transmission scheme.

In one case of PTM transmission scheme, a DCI associated with G-RNTI may be transmitted on PDCCH for scheduling of a group-common PDSCH in the DL. The group-common PDSCH (scrambled by the G-RNTI) may include MBS data packet. This transmission scheme may also be referred to as PTM transmission scheme I in the present disclosure.

In one case of PTM transmission scheme, a DCI associated with C-RNTI may be transmitted on PDCCH for scheduling of a group-common PDSCH in the DL. The group-common PDSCH (scrambled by the G-RNTI) may include MBS data packet. This transmission scheme may also be referred to as PTM transmission scheme II in the present disclosure.

In one implementation, upon reception of a data scheduled by the gNB through G-RNTI (e.g., PTM transmission scheme I) or C-RNTI (e.g., PTM transmission II or PTP transmission scheme), the UE may send a HARQ feedback to the gNB. The HARQ feedback may indicate either Acknowledgement (ACK) or Negative-Acknowledgement (NACK) for the corresponding data, depending on whether or not the data is successfully received. Moreover, the HARQ feedback may correspond to the same HARQ process as the data scheduled by the gNB. For example, when data scheduled by the gNB through G-RNTI/C-RNTI associates with a first HARQ process ID, the UE may send an ACK as a HARQ feedback to the network if the data is successfully received by the UE. On the other hand, the UE may send a NACK as a HARQ feedback to the network if the data is not successfully received by the UE. In the present example, the HARQ feedback may also associate with the first HARQ process ID.

In the first embodiment, once any one or multiple of situations listed as below happened, the UE may (re)start the second *drx-InactivityTimer* of MBS (or any other DRX timer configured for MBS): (a) the transmission scheme is switched from PTP transmission scheme to PTM transmission scheme I or II; (b) the UE receives any indicator indicating the situation (a) as above; (c) the UE transmits a HARQ feedback in response to a data reception scheduled by the gNB through G-RNTI (e.g., PTM transmission scheme I); (d) the UE transmits a HARQ feedback in response to a data reception scheduled by the gNB through G-RNTI (e.g., PTM transmission scheme I), and the HARQ feedback indicating NACK; (e) UE is scheduled by gNB with a data reception through PTM transmission scheme I, i.e., a DCI is received, and the DCI with CRC bits scrambled by G-RNTI schedule group common PDSCH reception; (f) UE receives a DCI with CRC bits scrambled by G-RNTI; (g) UE receives a DCI with CRC bits scrambled by G-RNTI and the DCI also indicates the scheduled PDSCH reception is new transmission; (h) an indication indicating the UE to activate the MBS service is received.

In one implementation, the indicator may be referred to as a RRC signaling to indicate the switching from PTP transmission scheme to PTM transmission scheme. Moreover, the RRC signaling may indicate the release of a RLC entity that corresponds to the PTP leg for performing PTP transmission. The RRC signaling may also indicate the addition of a RLC entity that corresponds to the PTM leg for perform PTM transmission (scheme I/scheme II).

In one implementation, the indicator may be referred to as a DCI or a MAC CE to indicate the switching from PTP transmission scheme to PTM transmission scheme. Here, the DCI or the MAC CE may indicate the activation of G-RNTI monitoring for the corresponding PTM transmission. The UE may start monitoring on PDCCH for DCI associated with G-RNTI for PTM transmission upon receiving the DCI or the MAC CE which indicates the switching from PTP transmission scheme to PTM transmission scheme.

In Case III of the first embodiment, the UE may maintain a *drx-InactivityTimer* (or any other DRX timer) for both non-MBS and MBS. In the disclosure, the *drx-InactivityTimer* for both non-MBS and MBS can be referred to as a third *drx-InactivityTimer,* but the disclosure is not limited thereto.

In the first embodiment, once any one or multiple of situations listed as below happened, the UE may (re)start the third *drx-InactivityTimer* (or any other DRX timer configured for both non-MBS and MBS): (a) the transmission scheme is switched from PTM transmission scheme to PTP transmission scheme; (b) the transmission scheme is switched from PTM transmission scheme I to PTP transmission scheme; (c) the transmission scheme is switched from PTM transmission scheme II to PTP transmission scheme; (d) the transmission scheme is switched from PTP transmission scheme to PTM transmission scheme I or II; (e) UE receives any indicator indicating any of situation of (a), (b), (c) and (d) as above; (f) UE is scheduled by gNB with a data reception through PTM transmission scheme I. That is, a DCI is received, and the DCI with CRC bits scrambled by G-RNTI schedule group common PDSCH reception; (g) UE receives a DCI with CRC bits scrambled by G-RNTI; (h) UE receives a DCI with CRC bits scrambled by G-RNTI and the DCI also indicates the scheduled PDSCH reception is new transmission.

In a second embodiment, the distributed DRX may be interpreted (implemented) as the UE is configured by the gNB with two sets of DRX related parameters and timers, wherein the two sets of DRX related parameter can be applied for PTP transmission scheme and PTM transmission scheme (I or II), respectively. Hence, the Cases I, II and III mentioned above may also be interpreted as the DRX related parameters and timers are configured individually for PTP transmission scheme and PTM transmission scheme (I or II). Hence, definition of the cases listed in the Table 1 may be interpreted as below.

Case I: All the parameters and timers are configured by the gNB to operate as distributed. That is, the UE receives two sets of: *drx-LongCycle, drx-ShortCycle, drx-ShortCycleTimer, drx-StartOffset, drx-SlotOffset, drx-onDurationTimer, drx-InactivityTimer, drx-HARQ-RTT-TimerDL* and *drx-RetransmissionTimerDL.* One set of the two sets is for an PTP transmission scheme, another set of the two sets is for PTM transmission scheme (I or II), and the parameters and timers mention above are merely exemplary.

Since the gNB may not configure all the parameters and timers (i.e., few of them may be optionally configured), the Case I may be implemented/interpreted as only part of parameters and timers are configured. In addition, the part of parameters and timers are all individually applied for PTP transmission scheme and PTM transmission scheme (I or II) (distributed DRX).

Case II: UE is configured with one set of the timers and parameters for controlling cycle of active time and is also configured with two sets of the timers and parameters for controlling the length of the active time and for controlling the monitoring of scheduling for data retransmission. That is, the set of timers and parameters for controlling cycle of active time are shared among PTP transmission scheme and PTM transmission scheme (I or II). In addition, each of the two sets of the timers and parameters for controlling the length of the active time and for controlling the monitoring of scheduling for data retransmission is individually applied for PTP transmission scheme and PTM transmission scheme (I or II) (distributed DRX).

Case III: UE is configured with one set of the timers and parameters for controlling cycle of active time and for controlling the length of the active time. In addition, the UE is configured with two sets of the timers and parameters and for controlling the monitoring of scheduling for data retransmission. That is, the set of timers and parameters for controlling cycle of active time and controlling the length of the active time are shared among PTP transmission scheme and PTM transmission scheme (I or II) (centralized DRX). In addition, each of the two sets of the timers and parameters for controlling the monitoring of scheduling for data retransmission is individually applied for PTP transmission scheme and PTM transmission scheme (I or II) (distributed DRX).

In the second embodiment, during the *drx-onDurationTimer, drx-InactivityTimer* or *drx-RetransmissionTimerDL* of PTP transmission scheme is running (i.e., Active time), the UE may monitor PDCCH for C-RNTI. In addition, during the *drx-onDurationTimer, drx-InactivityTimer* or *drx-RetransmissionTimerDL* of PTM transmission scheme I is running, the UE may monitor PDCCH for G-RNTI.

In the following, detailed designs on how the UE may behave on each case are introduced.

In case I and case II of the second embodiment, the UE may maintain two *drx-InactivityTimer,* and each for PTP transmission scheme and PTM transmission scheme (I or II). In one embodiment, the *drx-InactivityTimer* for PTP transmission scheme may be referred to as a fourth *drx-InactivityTimer,* and the *drx-InactivityTimer* for PTM transmission scheme (I or II) may be referred to as a fifth *drx-InactivityTimer,* but the disclosure is not limited thereto.

In the second embodiment, once any one or multiple of situations listed as below happened, the UE may (re)start the fourth *drx-InactivityTimer* (or any other configured DRX timer) of PTP transmission scheme: (a) the transmission scheme is switched from PTM transmission scheme to PTP transmission scheme; (b) the transmission scheme is switched from PTM transmission scheme I to PTP transmission scheme; (c) the transmission scheme is switched from PTM transmission scheme II to PTP transmission scheme; (d) UE receives any indicator indicating any of situation of (a), (b) and (c) as above; (e) UE transmits a HARQ feedback in response to a data reception scheduled by the gNB through G-RNTI (e.g., PTM transmission scheme I); (f) UE transmits a HARQ feedback in response to a data reception scheduled by the gNB through G-RNTI (e.g., PTM transmission scheme I), and the HARQ feedback indicating NACK; (g) UE is scheduled by gNB with a data reception through PTM transmission scheme II. That is, a DCI is received, and the DCI with CRC bits scrambled by C-RNTI schedule group common PDSCH reception; (h) UE receives a DCI with CRC bits scrambled by G-RNTI; (i) UE receives a DCI with CRC bits scrambled by G-RNTI and the DCI also indicates the scheduled PDSCH reception is new transmission.

In the second embodiment, once any one or multiple of situations listed as below happened, the UE may (re)start the fifth *drx-InactivityTimer* (or any other configured DRX timer) of PTM transmission scheme (I or II): (a) The transmission scheme is switched from PTP transmission scheme to PTM transmission scheme I or II; (b) UE receives any indicator indicating the situation a as above; (c) UE transmits a HARQ feedback in response to a data reception scheduled by the gNB through G-RNTI (e.g., PTM transmission scheme I); (d) UE transmits a HARQ feedback in response to a data reception scheduled by the gNB through G-RNTI (e.g., PTM transmission scheme I), and the HARQ feedback indicating NACK; (e) UE is scheduled by gNB with a data reception through PTM transmission scheme I, i.e., a DCI is received, and the DCI with CRC bits scrambled by G-RNTI schedule group common PDSCH reception; (f) UE receives a DCI with CRC bits scrambled by G-RNTI; (g) UE receives a DCI with CRC bits scrambled by G-RNTI and the DCI also indicates the scheduled PDSCH reception is new transmission; (h) an indication indicating the UE to activate the MBS service is received.

In case III of the second embodiment, the UE may maintain a *drx-InactivityTimer* shared among PTP transmission scheme and PTM transmission scheme (I or II). In the disclosure, the *drx-InactivityTimer* shared among PTP transmission scheme and PTM transmission scheme (I or II) can be referred to as a sixth *drx-InactivityTimer,* but the disclosure is not limited thereto.

In the second embodiment, once any one or multiple of situations listed as below happened, the UE may (re)start the sixth *drx-InactivityTimer* (or any other configured DRX timer that is shared among PTP transmission scheme and PTM transmission scheme I or II): (a) the transmission scheme is switched from PTM transmission scheme to PTP transmission scheme; (b) the transmission scheme is switched from PTM transmission scheme I to PTP transmission scheme; (c) the transmission scheme is switched from PTM transmission scheme II to PTP transmission scheme; (d) the transmission scheme is switched from PTP transmission scheme to PTM transmission scheme I or II; (e) UE receives any indicator indicating any of situation of a, b, c and d as above; (f) UE is scheduled by gNB with a data reception through PTM transmission scheme I. That is, a DCI is received, and the DCI with CRC bits scrambled by G-RNTI schedule group common PDSCH reception; (g) UE receives a DCI with CRC bits scrambled by G-RNTI; (h) UE receives a DCI with CRC bits scrambled by G-RNTI and the DCI also indicates the scheduled PDSCH reception is new transmission.

In a third embodiment, the distributed DRX may be interpreted (implemented) as the UE is configured by the gNB with two sets of DRX related parameters and timers. In one embodiment, one of the two sets is applied for traffic scheduled by C-RNTI, and another set of the two sets is applied for traffic associated with PTM transmission scheme I. Hence, the Case I, II and III mentioned above may also be interpreted as the DRX related parameters and timers are configured individually for traffic scheduled by C-RNTI and traffic associated with PTM transmission scheme I.

Hence, definition of the cases listed in the Table 1 may be interpreted as below.
Case I: All the parameters and timers are configured by the gNB to operate as distributed. That is, the UE receives two sets of: *drx-LongCycle, drx-ShortCycle, drx-ShortCycleTimer, drx-StartOffset, drx-SlotOffset, drx-onDurationTimer, drx-InactivityTimer, drx-HARQ-RTT-TimerDL* and *drx-RetransmissionTimerDL.* One set of the two sets is for traffic scheduled by C-RNTI, another set of the two sets is for traffic associated with transmission scheme I, and the parameters and timers mention above are merely exemplary. Since the gNB may not configure all the parameters and timers (i.e., few of them may be optionally configured), the Case I may be implemented/interpreted as only part of parameters and timers are configured. And the part of parameters and timers are all individually applied for traffic scheduled by C-RNTI and traffic associated with PTM transmission scheme (I or II) (distributed DRX).
Case II: UE is configured with one set of the timers and parameters for controlling cycle of active time and is also configured with two sets of the timers and parameters for controlling the length of the active time and for controlling the monitoring of scheduling for data retransmission. That is, the set of timers and parameters for controlling cycle of active time are shared among traffic scheduled by C-RNTI and traffic associated with PTM transmission scheme (I or II). In addition, each of the two sets of the timers and parameters for controlling the length of the active time and for controlling the monitoring of scheduling for data retransmission is individually applied for traffic scheduled by C-RNTI and traffic associated with PTM transmission scheme (I or II) (distributed DRX).
Case III: UE is configured with one set of the timers and parameters for controlling cycle of active time and for controlling the length of the active time. In addition, the UE is configured with two sets of the timers and parameters and for controlling the monitoring of scheduling for data retransmission. That is, the set of timers and parameters for controlling cycle of active time and controlling the length of the active time are shared among traffic scheduled by C-RNTI and traffic associated with PTM transmission scheme (I or II) (centralized DRX). In addition, each of the two sets of the timers and parameters for controlling the monitoring of scheduling for data retransmission is individually applied for traffic scheduled by C-RNTI and traffic associated with PTM transmission scheme (I or II) (distributed DRX).

In the third embodiment, during the *drx-onDurationTimer, drx-InactivityTimer* or *drx-RetransmissionTimerDL* of the first set is running, the UE may monitor PDCCH for C-RNTI. In addition, during the *drx-onDurationTimer, drx-InactivityTimer* or *drx-RetransmissionTimerDL* of the second set is running, the UE may monitor PDCCH for G-RNTI.

In the following, detailed designs on how the UE may behave on each case are introduced.

In case I and case II of the third embodiment, the UE may maintain two *drx-InactivityTimer,* and each for traffic scheduled by C-RNTI and traffic associated with PTM transmission scheme (I or II). In one embodiment, the *drx-InactivityTimer* for traffic scheduled by C-RNTI may be referred to as a seventh *drx-InactivityTimer,* and the *drx-InactivityTimer* for traffic associated with PTM transmission scheme (I or II) may be referred to as an eighth *drx-InactivityTimer,* but the disclosure is not limited thereto.

In the third embodiment, once any one or multiple of situations listed as below happened, the UE may (re)start the seventh *drx-InactivityTimer* (or any other configured DRX timer) for traffic scheduled by C-RNTI: (a) the transmission scheme is switched from PTM transmission scheme to PTP transmission scheme; (b) the transmission scheme is switched from PTM transmission scheme I to PTP transmission scheme; (c) the transmission scheme is switched from PTM transmission scheme II to PTP transmission scheme; (d) UE receives any indicator indicating any of situation of (a), (b) and (c) as above; (e) UE transmits a HARQ feedback in response to a data reception scheduled by the gNB through G-RNTI (e.g., PTM transmission scheme I); (f) UE transmits a HARQ feedback in response to a data reception scheduled by the gNB through G-RNTI (e.g., PTM transmission scheme I), and the HARQ feedback indicating NACK; (g) UE is scheduled by gNB with a data reception through PTM transmission scheme II, i.e., a DCI is received, and the DCI with CRC bits scrambled by C-RNTI schedule group common PDSCH reception; (h) UE receives a DCI with CRC bits scrambled by G-RNTI; (i) UE receives a DCI with CRC bits scrambled by G-RNTI and the DCI also indicates the scheduled PDSCH reception is new transmission.

In the third embodiment, once any one or multiple of situations listed as below happened, the UE may (re)start the eighth *drx-InactivityTimer* (or any other configured DRX timer) of traffic associated with PTM transmission scheme (I or II): (a) The transmission scheme is switched from PTP transmission scheme to PTM transmission scheme I or II; (b) UE receives any indicator indicating the situation a as above; (c) UE transmits a HARQ feedback in response to a data reception scheduled by the gNB through G-RNTI (e.g., PTM transmission scheme I); (d) UE transmits a HARQ feedback in response to a data reception scheduled by the gNB through G-RNTI (e.g., PTM transmission scheme I), and the HARQ feedback indicating NACK; (e) UE is scheduled by gNB with a data reception through PTM transmission scheme I, i.e., a DCI is received, and the DCI with CRC bits scrambled by G-RNTI schedule group common PDSCH reception; (f) UE receives a DCI with CRC bits scrambled by G-RNTI; (g) UE receives a DCI with CRC bits scrambled by G-RNTI and the DCI also indicates the scheduled PDSCH reception is new transmission; (h) an indication indicating the UE to activate the MBS service is received.

In case III of the third embodiment, the UE may maintain a *drx-InactivityTimer* shared among traffic scheduled by C-RNTI and traffic associated with PTM transmission scheme (I or II). In the disclosure, the *drx-InactivityTimer* shared among traffic scheduled by C-RNTI and traffic associated with PTM transmission scheme (I or II) can be referred to as a ninth *drx-InactivityTimer,* but the disclosure is not limited thereto.

In the third embodiment, once any one or multiple of situations listed as below happened, the UE may (re)start the ninth *drx-InactivityTimer* (or any other configured DRX timer): (a) the transmission scheme is switched from PTM transmission scheme to PTP transmission scheme; (b) the transmission scheme is switched from PTM transmission scheme I to PTP transmission scheme; (c) the transmission scheme is switched from PTM transmission scheme II to PTP transmission scheme; (d) the transmission scheme is switched from PTP transmission scheme to PTM transmission scheme I or II; (e) UE receives any indicator indicating any of situation of a, b, c and d as above; (f) UE is scheduled by gNB with a data reception through PTM transmission scheme I, i.e., a DCI is received, and the DCI with CRC bits scrambled by G-RNTI schedule group common PDSCH reception; (g) UE receives a DCI with CRC bits scrambled by G-RNTI; (h) UE receives a DCI with CRC bits scrambled by G-RNTI and the DCI also indicates the scheduled PDSCH reception is new transmission.

See FIG. 4, which shows a flow chart of the method for configuring a DRX setting according to an embodiment of the disclosure. The method of this embodiment may be executed by the UE (e.g., the node 200 in FIG. 2), and the details of each step in FIG. 4 will be described below with the components shown in FIG. 2.

Firstly, in step S410, the processor 228 controls the transceiver 220 to receive at least one configuration from a network node. In one embodiment, the network node can be the serving base station, the serving cell of the UE, and/or gNB. In one embodiment, the configuration is used for receiving an MBS. In one embodiment, the configuration includes a first RNTI and a plurality of first DRX parameters used for monitoring a PDCCH based on the first RNTI, and the UE receives the MBS from the network node via at least one of a PTP transmission scheme and a PTM transmission scheme.

In step S420, the processor 228 controls the transceiver 220 to receive an indication from the network node. In step S430, the processor 228 starts a first DRX timer associated with the first DRX parameters in response to the indication.

In one embodiment, the first RNTI is one of a group-RNTI (G-RNTI) and a UE-specific RNTI (e.g., a C-RNTI).

In one embodiment, the configuration from the network node further includes a plurality of second DRX parameters, wherein the second DRX parameters are used for monitoring the PDCCH based on a second RNTI. In this case, the processor 228 further starts a second DRX timer associated with the second DRX parameters in response to the indication.

In one embodiment, the second RNTI is another of the G-RNTI and the UE-specific RNTI. For better understanding of the disclosure, the first RNTI and the second RNTI would be assumed to be the G-RNTI and the UE-specific RNTI, respectively.

In one embodiment, the indication can correspond to one or a combination of the situations mentioned in the first/second/third embodiments. For example, the indication can indicate that a transmission using at least one of the PTM transmission scheme and the PTP transmission scheme begins. In this case, the processor 128 accordingly starts at least one of the first DRX timer and the second DRX timer in response to the indication.

In one embodiment, the indication can indicate that a transmission using at least one of the PTM transmission scheme and the PTP transmission scheme finishes. In this case, the processor 128 accordingly starts at least one of the first DRX timer and the second DRX timer in response to the indication.

In one embodiment, the indication further indicates that the transmission scheme is switched from one of the PTM transmission scheme and the PTP transmission scheme to another of the PTM transmission scheme and the PTP transmission scheme. In this case, the processor 128 accordingly starts at least one of the first DRX timer and the second DRX timer in response to the indication.

In the embodiments of the disclosure, the first DRX parameters can be regarded as a first set of the two sets of DRX related parameters and timers configured by the gNB, and the second DRX parameters can be regarded as a second set of the two sets of DRX related parameters and timers configured by the gNB

In the embodiment where the first RNTI is assumed to be G-RNTI, the first DRX timer associated with the first DRX parameters can be the timers for PTM transmission scheme (I or II), which includes at least one of a *drx-ShortCycleTimer, drx-onDurationTimer, drx-InactivityTimer* (e.g., the fifth *drx-InactivityTimer* mentioned in the above), *drx-HARQ-RTT-TimerDL, drx-RetransmissionTimerDL* particular for PTM transmission scheme (I or II).

In this case, in response to determining that one or a combination of the following situations happens, the UE may (re)start one or more of the timers for the PTM transmission scheme (I or II) as the first DRX timer: (a) The transmission scheme is switched from PTP transmission scheme to PTM transmission scheme I or II; (b) UE receives any indicator indicating the situation (a) as above; (c) UE transmits a HARQ feedback in response to a data reception scheduled by the gNB through G-RNTI (e.g., PTM transmission scheme I); (d) UE transmits a HARQ feedback in response to a data reception scheduled by the gNB through G-RNTI (e.g., PTM transmission scheme I), and the HARQ feedback indicating NACK; (e) UE is scheduled by gNB with a data reception through PTM transmission scheme I, i.e., a DCI is received, and the DCI with CRC bits scrambled by G-RNTI schedule group common PDSCH reception; (f) UE receives a DCI with CRC bits scrambled by G-RNTI; (g) UE receives a DCI with CRC bits scrambled by G-RNTI and the DCI also indicates the scheduled PDSCH reception is new transmission; (h) an indication indicating the UE to activate the MBS service is received.

In the embodiment where the second RNTI is assumed to be UE-specific RNTI (e.g., C-RNTI), the second DRX timer associated with the second DRX parameters can be the timers for PTP transmission scheme, which includes at least one of a *drx-ShortCycleTimer, drx-onDurationTimer, drx-InactivityTimer* (e.g., the fourth *drx-InactivityTimer* mentioned in the above), *drx-HARQ-RTT-TimerDL, drx-RetransmissionTimerDL* particular for PTP transmission scheme.

In this case, in response to determining that one or a combination of the following situations happens, the UE may (re)start one or more of the timers for the PTP transmission scheme as the second DRX timer: (a) the transmission scheme is switched from PTM transmission scheme to PTP transmission scheme; (b) the transmission scheme is switched from PTM transmission scheme I to PTP transmission scheme; (c) the transmission scheme is switched from PTM transmission scheme II to PTP transmission scheme; (d) UE receives any indicator indicating any of situation of (a), (b) and (c) as above; (e) UE transmits a HARQ feedback in response to a data reception scheduled by the gNB through G-RNTI (e.g., PTM transmission scheme I); (f) UE transmits a HARQ feedback in response to a data reception scheduled by the gNB through G-RNTI (e.g., PTM transmission scheme I), and the HARQ feedback indicating NACK; (g) UE is scheduled by gNB with a data reception through PTM transmission scheme II. That is, a DCI is received, and the DCI with CRC bits scrambled by C-RNTI schedule group common PDSCH reception; (h) UE receives a DCI with CRC bits scrambled by G-RNTI; (i) UE receives a DCI with CRC bits scrambled by G-RNTI and the DCI also indicates the scheduled PDSCH reception is new transmission.

In some embodiments, details of FIG. 4 can be also referred to descriptions related to one or more of the above embodiments, in particular, the second embodiment, which would not be repeated herein.

To sum up, in the embodiments of the disclosure, how the data transmissions of MBS affect DRX procedures are proposed. For example, when the UE is configured, by the network node, with the first RNTI (e.g., a G-RNTI) and the first DRX parameters, the UE can start the first DRX timer associated with the first DRX parameters in response to various indications. In addition, when the UE is further configured, by the network node, with the second RNTI (e.g., a C-RNTI) and the second DRX parameters, the UE can further start the second DRX timer associated with the second DRX parameters in response to the indications.

In one embodiment, the first DRX parameters can be considered as being configured for one of PTP transmission scheme and PTM transmission scheme, and the second DRX parameters can be considered as being configured for another of PTP transmission scheme and PTM transmission scheme. From another perspective, the UE can be configured with two sets of DRX parameters, in which one set is used for PTP transmission scheme, and another set is for PTM transmission scheme.

It will be apparent to those skilled in the art that various modifications and variations can be made to the structure of the present invention without departing from the scope or spirit of the disclosure. In view of the foregoing, it is intended that the present disclosure cover modifications and variations of this invention provided they fall within the scope of the following claims and their equivalents.

## Claims

1. A method for configuring a discontinuous reception, DRX, setting, adapted to user equipment, UE (200), comprising:
receiving, by the UE, at least one configuration from a network node, wherein the at least one configuration is used for receiving a multicast broadcast service, MBS, the at least one configuration comprises a first radio network temporary identifier, RNTI, and a plurality of first DRX parameters used for monitoring a physical downlink control channel, PDCCH, based on the first RNTI, and the UE receives the MBS from the network node via at least one of a point-to-point, PTP, transmission scheme and a point-to-multipoint, PTM, transmission scheme;
receiving, by the UE, an indication from the network node, wherein the indication indicates a transmission scheme used for the MBS; and
starting, by the UE, a first DRX timer associated with the first DRX parameters in response to the indication.

2. The method according to claim 1, wherein the indication further indicates that a transmission using at least one of the PTM transmission scheme and the PTP transmission scheme begins.

3. The method according to claim 1, wherein the first RNTI is one of a group-RNTI (G-RNTI) and a UE-specific RNTI.

4. The method according to claim 3, wherein the at least one configuration further comprises a plurality of second DRX parameters from the network node, wherein the second DRX parameter are used for monitoring the PDCCH based on a second RNTI, and the method further comprises:
starting, by the UE, a second DRX timer associated with the second DRX parameters in response to the indication.

5. The method according to claim 4, wherein the second RNTI is another of the G-RNTI and the UE-specific RNTI.

6. The method according to claim 4, wherein the indication further indicates that a transmission using at least one of the PTM transmission scheme and the PTP transmission scheme finishes.

7. The method according to claim 4, wherein the second DRX timer associated with the second DRX parameters comprises at least one of a *drx-ShortCycleTimer, drx-onDurationTimer, drx-InactivityTimer, drx-HARQ-RTT-TimerDL, drx-RetransmissionTimerDL.*

8. The method according to claim 1, wherein the indication further indicates that the transmission scheme is switched from one of the PTM transmission scheme and the PTP transmission scheme to another of the PTM transmission scheme and the PTP transmission scheme.

9. The method according to claim 1, wherein the first DRX timer associated with the first DRX parameters comprises at least one of a *drx-ShortCycleTimer, drx-onDurationTimer, drx-InactivityTimer, drx-HARQ-RTT-TimerDL, drx-RetransmissionTimerDL.*

10. A user equipment, UE (200), comprising:
a processor (228); and
a memory (234) coupled to the processor, wherein the memory stores a computer-executable instructions (232) that when executed by the processor, causes the processor to perform the method of any of claims 1 to 9.
